# EUROPEAN PATENT SPECIFICATION

(11) **EP 3 262 285 B1**
(45) Date of publication and mention of the grant of the patent: **20.11.2019**
(21) Application number: 16756414.5
(22) Date of filing: 26.02.2016
(51) Int. Cl.: F01K 7/22

(54) **REHEATING OF A WORKING FLUID WITHIN A TURBINE SYSTEM FOR POWER GENERATION**
WIEDERERWÄRMUNG EINER ARBEITSFLÜSSIGKEIT IN EINEM TURBINENSYSTEM ZUR ENERGIEERZEUGUNG
RÉCHAUFFAGE D'UN FLUIDE DE TRAVAIL À L'INTÉRIEUR D'UN SYSTÈME DE TURBINE DE GÉNÉRATION D'ÉNERGIE

(30) Priority: 27.02.2015 US 201562121593 P
(43) Date of publication of application: 03.01.2018
(73) Proprietor: Electric Power Research Institute, Inc., Charlotte, NC 28262 (US)
(72) Inventor: HUME, Scott Alexander, Cornelius, North Carolina 28031 (US); THIMSEN, David, Liitle Canada, Minnesota 55177 (US)
(74) Representative: Appleyard Lees IP LLP
(86) International application number: PCT/US2016/019699
(87) International publication number: WO 2016/138342

(56) References cited:
- EP-A1- 2 725 205
- GB-A- 246 593
- GB-A- 743 869
- JP-A- S5 669 408
- RU-A- 2010 101 708
- US-A1- 2014 060 053

## Description

### BACKGROUND OF THE INVENTION

This invention relates generally to turbine systems used in power generation, and more particularly to a system and method of providing in-situ incremental reheating to increase thermodynamic efficiency of such turbine systems Prior art systems are disclosed in documents GB 246,593, GB 743,869 and US2014/0060053 A1.

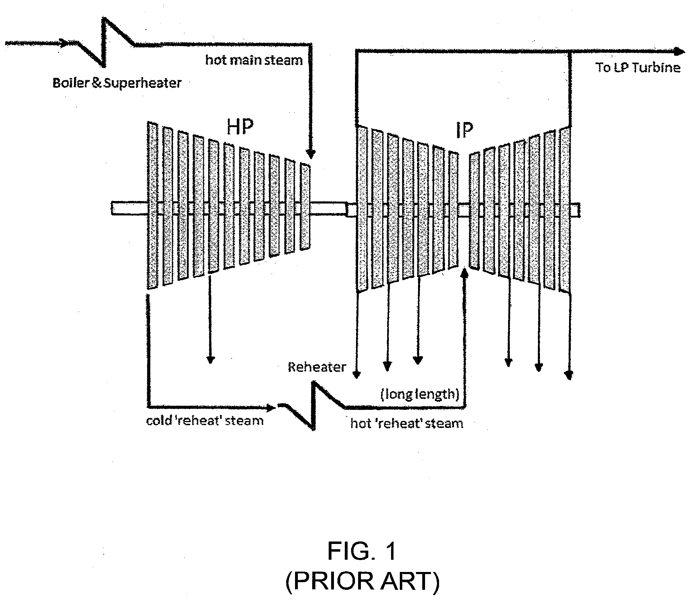

The steam-Rankine power cycle is a standard thermodynamic power cycle that converts heat in to power. As such, the efficiency at which it converts heat to power depends most importantly on the temperature to which steam is raised (higher is better) and the temperature at which low-grade heat is removed from the power cycle (lower is better). It has been the historical practice at steam-electric power plants to expand high temperature steam in a high pressure (HP) turbine then reheat the steam before it expands in an intermediate pressure (IP) turbine, FIG. 1. A handful of power plants have employed double reheat in which steam issuing from the IP turbine is reheated again before being sent to a low-pressure (LP) turbine. By increasing the average temperature of heat addition to the steam working fluid, the overall power cycle efficiency and net plant efficiency is increased.

The use of single reheat steam-Rankine power cycles is standard for steam-electric plants greater than about 150 MWe capacity. The increased steam piping/controls costs and the more laborious start-up and shutdown sequences of operations associated with double reheat have limited its acceptance by power plant developer/owners. State of the art steam-electric power plants employ main steam conditions of up to 27.57 MPa/604.44 °C (4000 psia/1120 °F) and single reheat temperature of up to 604.44 °C (1120 °F).

Steam turbines generally consist of alternating stationary (stator) and rotating (rotator) blades arranged in a circle around the turbine shaft. The stationary blades turn and accelerate the steam flow. The steam momentum is transferred to the rotating blades which turn the turbine shaft and, ultimately, the electric generator. A stator with the rotator following, together, make up a single stage of the turbine. Typical HP and LP steam turbines will have in excess of 10 stages in series.

In the last decade the prospect of increasing steam temperatures to as high as 760 °C (1400 °F) and pressures as high as 35.16 MPa (5100 psia) with single reheat temperatures as high as 760 °C (1400 °F) has been investigated. However, increasing steam temperatures above the state of the art 604.44 °C (1120 °F) requires the use of high nickel alloys not currently used in common steam-electric power plants. These high nickel alloys are required for producing high pressure main steam and reheat steam in final superheater/reheaters to convey the high pressure/temperature steam from the boiler to the turbine.

Unfortunately, suitable high nickel alloys are likely to cost an order of magnitude more than the steels in state of the art power plants. This has led to the pursuit of alternative ways of conveying the high temperature energy from the boiler to the turbine at pressures lower than the main steam pressure, minimizing the strength requirements and hence material quantities required of these exotic metals.

Accordingly, there remains a need for a system and method of increasing steam temperature without the need for expensive alloys and piping.

### BRIEF SUMMARY OF THE INVENTION

This need is addressed by the present invention, which provides an in-situ incremental reheating system according to claim 1 and a method to increase thermodynamic efficiency of turbine systems used in power generation according to claim 6.

According to one aspect of the invention, an in-situ incremental reheating system configured to increase steam temperature and thermodynamic efficiencies of a steam turbine includes a pump; a radiant heater; piping inter-connecting the pump, radiant heater and steam turbine to create a flow circuit; and a heat transfer material configured to flow through the flow circuit and transfer heat directly to steam used in the steam turbine. The pump moves the heat transfer material through the flow circuit and the radiant heater regenerates the heat transfer material after the heat transfer material transfers heat to the steam.

According to one aspect of the invention, an in-situ incremental reheating system configured to increase steam temperature and thermodynamic efficiencies of a steam turbine having a high pressure turbine, an intermediate pressure turbine, and a low pressure turbine, the system includes a flow circuit and a heat transfer material configured to flow through the flow circuit and transfer heat directly to steam used in the steam turbine. The flow circuit includes a pump configured to move fluid through the flow circuit; a radiant heater configured to regenerate the fluid flowing through the flow circuit; internal flow passages extending through turbine stator blades of the steam turbine; and piping inter-connecting the pump, radiant heater and flow passages.

According to another aspect of the invention, a method for increasing steam temperature and thermodynamic efficiencies of a steam turbine includes the steps of providing a flow circuit having a pump, radiant heater, and piping interconnecting the pump and radiant heater to internal passages of the steam turbine; providing a heat transfer material configured to flow through the flow circuit; heating the heat transfer material using the radiant heater; moving the heated heat transfer material through the piping using the pump and into internal passages of a high pressure turbine of the steam turbine, wherein the heated heat transfer material transfers heat directly to steam expanded in the high pressure turbine to increase an average temperature of heat addition; transferring the heated steam to an intermediate pressure turbine of the steam turbine; and transferring the heated steam to a low pressure turbine of the steam turbine.

### BRIEF DESCRIPTION OF THE DRAWINGS

The invention may be best understood by reference to the following description taken in conjunction with the accompanying drawing figures, in which:
FIG. 1 shows a prior art reheating arrangement for a turbine; and
FIG. 2 shows an in-situ incremental reheating system according to an embodiment of the invention.

### DETAILED DESCRIPTION OF THE INVENTION

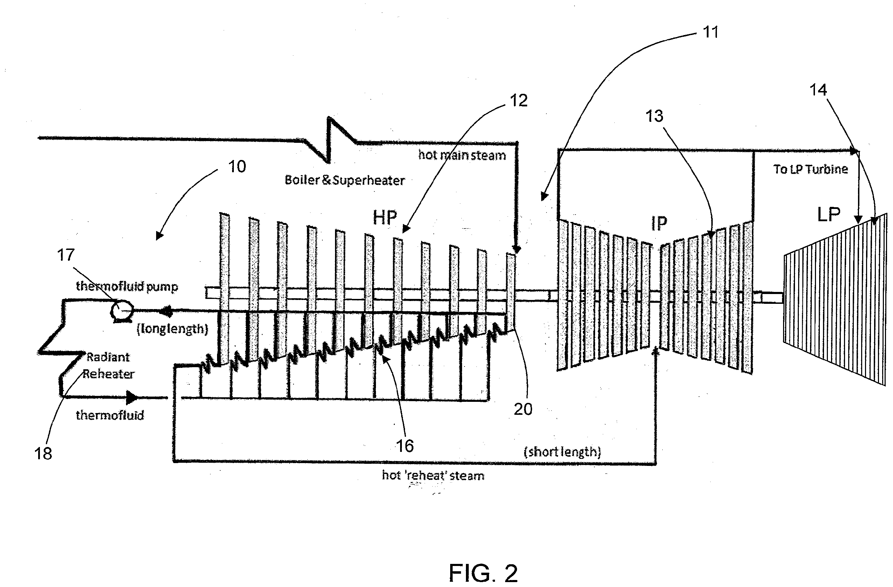

Referring to the drawings wherein identical reference numerals denote the same elements throughout the various views, FIG. 2 illustrates an in-situ incremental reheating system 10 configured to increase steam temperature and thermodynamic efficiencies of a steam turbine 11. As shown, the steam turbine 11 includes a high pressure (HP) turbine 12, an intermediate pressure (IP) turbine 13, and a low pressure (LP) turbine 14. The system 10 uses an intermediate thermofluid or heat transfer material whose vapor pressure is low at temperatures up to 760°C (1400 °F) (i.e. liquid salt or metal), allowing the use of relatively thin wall, low-pressure piping. The thermofluid is used to transfer heat directly to steam used in the steam turbine 11 as the steam is expanded in the HP turbine 12, thus producing more power and eliminating the need for a separate reheat circuit as well as reducing the need for costly high nickel alloys required to convey the high temperature steam from a boiler to the turbine.

As illustrated, the thermofluid is circulated through internal flow passages 16 in the turbine stator blades 20 by a pump 17 to transfer heat from the thermofluid to steam expanded in the HP turbine 12. A radiant heater 18 is used to reheat or regenerate the thermofluid back to the desired temperature. The thermofluid is transferred to the turbine 11 at low pressure, requiring minimal thickness piping, where it can be used to continually reheat the working fluid (steam) as it expands through the turbine, eliminating the need for a discrete reheater circuit. This improves the average temperature of heat addition, thereby improving efficiency without increasing the final steam temperature.

Once the steam is heated by the thermofluid, it is transferred to the IP and LP turbines. In general, the current invention increases efficiency by providing a continuous reheat that increases the average temperature of heat addition significantly. For a subcritical steam power cycle (typical of those built in the 1990s), this increase in the average temperature of steam addition may be as much as 15.5 °C (60 °F). Additionally, the increase efficiency results in an increased turbine output for approximately the same size turbine and boiler (approx. +0.7% age points improvement using the same temperature limits on the steam).

The foregoing has described an in-situ reheating system and method for increasing thermodynamic efficiencies of turbine systems used in power generation. All of the features disclosed in this specification (including any accompanying claims, abstract and drawings), and/or all of the steps of any method or process so disclosed, may be combined in any combination, except combinations where at least some of such features and/or steps are mutually exclusive.

## Claims

1. An in-situ incremental reheating system (10) configured to increase steam temperature and thermodynamic efficiencies of a steam turbine (11), comprising:
(a) a pump (17);
(b) a radiant heater (18);
(c) piping inter-connecting the pump, radiant heater and steam turbine to create a flow circuit;
(d) a heat transfer material configured to flow through the flow circuit and transfer heat directly to steam used in the steam turbine, wherein the pump moves the heat transfer material through the flow circuit and the radiant heater regenerates the heat transfer material after the heat transfer material transfers heat to the steam;
**characterised in that**
the heat transfer material flows through internal flow passages (16) of stator blades (20) of the steam turbine (11) to transfer heat directly to the steam.

2. The reheating system (10) of claim 1, wherein the heat transfer material is a liquid salt.

3. The reheating system (10) of claim 1, wherein the heat transfer material is a liquid metal.

4. The reheating system (10) of claim 1, wherein the heat transfer material is heated up to a temperature of 1400 degrees Fahrenheit (760 degrees Celsius).

5. The reheating system (10) of claim 1 comprising a high pressure turbine (12), an intermediate pressure turbine (13), and a low pressure turbine (14).

6. A method for increasing steam temperature and thermodynamic efficiencies of a steam turbine (11), comprising the steps of:
(a) providing a flow circuit having a pump (17), radiant heater (18), and piping interconnecting the pump and radiant heater to internal passages of the steam turbine;
(b) providing a heat transfer material configured to flow through the flow circuit;
(c) heating the heat transfer material using the radiant heater;
(d) moving the heated heat transfer material through the piping using the pump and into internal passages of a high pressure turbine (12) of the steam turbine, wherein the heated heat transfer material transfers heat directly to steam expanded in the high pressure turbine to increase an average temperature of heat addition;
(e) transferring the heated steam to an intermediate pressure turbine (13) of the steam turbine; and
(f) transferring the heated steam to a low pressure turbine (14) of the steam turbine;
**characterised in that**
the heat transfer material flows through internal flow passages (16) of stator blades (20) of the steam turbine (11) to transfer heat directly to the steam.

7. The method of claim 6, further including the step of repeating steps (c) and (d) to provide continual heat addition to the steam expanded in the high pressure turbine.

8. The method according to claim 6, wherein the step of heating includes the step of heating the heat transfer material up to a temperature of 1400 degrees Fahrenheit (760 degrees Celsius).

## Patentansprüche

1. Schrittweises Wiedererwärmungssystem (10) am Einsatzort, das dazu ausgelegt ist, die Dampftemperatur und thermodynamischen Wirkungsgrade einer Dampfturbine (11) zu erhöhen, Folgendes umfassend:
(a) eine Pumpe (17);
(b) einen Heizstrahler (18);
(c) Rohrleitungen, die die Pumpe, den Heizstrahler und die Dampfturbine verbinden, um einen Strömungskreis zu erzeugen;
(d) ein Wärmeübertragungsmaterial, das dazu ausgelegt ist, durch den Strömungskreis zu strömen und Wärme direkt auf in der Dampfturbine verwendeten Dampf zu übertragen, wobei die Pumpe das Wärmeübertragungsmaterial durch den Strömungskreis bewegt und der Heizstrahler das Wärmeübertragungsmaterial regeneriert, nachdem das Wärmeübertragungsmaterial Wärme auf den Dampf übertragen hat;
**dadurch gekennzeichnet, dass**
das Wärmeübertragungsmaterial durch innere Strömungskanäle (16) von Leitschaufeln (20) der Dampfturbine (11) strömt, um die Wärme direkt auf den Dampf zu übertragen.

2. Wiedererwärmungssystem (10) nach Anspruch 1, wobei das Wärmeübertragungsmaterial ein Flüssigsalz ist.

3. Wiedererwärmungssystem (10) nach Anspruch 1, wobei das Wärmeübertragungsmaterial ein Flüssigmetall ist.

4. Wiedererwärmungssystem (10) nach Anspruch 1, wobei das Wärmeübertragungsmaterial auf eine Temperatur von bis zu 1400 Grad Fahrenheit (760 Grad Celsius) erwärmt wird.

5. Wiedererwärmungssystem (10) nach Anspruch 1, das eine Hochdruckturbine (12), eine Mitteldruckturbine (13) und eine Niederdruckturbine (14) umfasst.

6. Verfahren zum Erhöhen der Dampftemperatur und thermodynamischen Wirkungsgrade einer Dampfturbine (11), die Folgenden Schritte umfassend:
(a) Vorsehen eines Strömungskreises, der eine Pumpe (17), einen Heizstrahler (18) und Rohrleitungen, die die Pumpe und den Heizstrahler mit inneren Kanälen der Dampfturbine verbinden, umfasst;
(b) Vorsehen eines Wärmeübertragungsmaterials, das dazu ausgelegt ist, durch den Strömungskreis zu strömen;
(c) Erwärmen des Wärmeübertragungsmaterials unter Verwendung des Heizstrahlers;
(d) Bewegen des Wärmeübertragungsmaterials durch die Rohrleitungen unter Verwendung der Pumpe und in innere Kanäle einer Hochdruckturbine (12) der Dampfturbine, wobei das erwärmte Wärmeübertragungsmaterial Wärme direkt auf in der Hochdruckturbine ausgedehnten Dampf überträgt, um die Durchschnittstemperatur der Wärmezufuhr zu erhöhen;
(e) Übertragen des erwärmten Dampfes auf eine Mitteldruckturbine (13) der Dampfturbine; und
(f) Übertragen des erwärmten Dampfes auf eine Niederdruckturbine (14) der Dampfturbine;
**dadurch gekennzeichnet, dass**
das Wärmeübertragungsmaterial durch innere Strömungskanäle (16) von Leitschaufeln (20) der Dampfturbine (11) strömt, um Wärme direkt auf den Dampf zu übertragen.

7. Verfahren nach Anspruch 6, ferner den Schritt des Wiederholens der Schritte (c) und (d) umfassend, um eine durchgehende Wärmezufuhr zum in der Hochdruckturbine ausgedehnten Dampf vorzusehen.

8. Verfahren nach Anspruch 6, wobei der Schritt des Erwärmens den Schritt des Erwärmens des Wärmeübertragungsmaterials auf eine Temperatur bis zu 1400 Grad Fahrenheit (760 Grad Celsius) enthält.

## Revendications

1. Système de réchauffage incrémentiel in situ (10) configuré pour augmenter la température de la vapeur d'eau et les rendements thermodynamiques d'une turbine à vapeur (11), comprenant :
(a) une pompe (17) ;
(b) un dispositif de chauffage par rayonnement (18) ;
(c) une canalisation interconnectant la pompe, le dispositif de chauffage par rayonnement et la turbine à vapeur pour créer un circuit d'écoulement ;
(d) un matériau de transfert de chaleur configuré pour s'écouler à travers le circuit d'écoulement et transférer directement de la chaleur à la vapeur d'eau utilisée dans la turbine à vapeur, la pompe déplaçant le matériau de transfert de chaleur à travers le circuit d'écoulement et le dispositif de chauffage par rayonnement régénérant le matériau de transfert de chaleur après que le matériau de transfert de chaleur a transféré de la chaleur à la vapeur d'eau ;
**caractérisé en ce que**
le matériau de transfert de chaleur s'écoule à travers des passages d'écoulement internes (16) de lames de stator (20) de la turbine à vapeur (11) pour transférer directement de la chaleur à la vapeur d'eau.

2. Système de réchauffage (10) de la revendication 1, dans lequel le matériau de transfert de chaleur est un sel liquide.

3. Système de réchauffage (10) de la revendication 1, dans lequel le matériau de transfert de chaleur est un métal liquide.

4. Système de réchauffage (10) de la revendication 1, dans lequel le matériau de transfert de chaleur est chauffé jusqu'à une température de 1400 degrés Fahrenheit (760 degrés Celsius).

5. Système de réchauffage (10) de la revendication 1 comprenant une turbine à haute pression (12), une turbine à pression intermédiaire (13), et une turbine à basse pression (14).

6. Procédé d'augmentation de la température de la vapeur d'eau et des rendements thermodynamiques d'une turbine à vapeur (11), comprenant les étapes de :
(a) fourniture d'un circuit d'écoulement ayant une pompe (17), un dispositif de chauffage par rayonnement (18), et une canalisation interconnectant la pompe et le dispositif de chauffage par rayonnement à des passages internes de la turbine à vapeur ;
(b) fourniture d'un matériau de transfert de chaleur configuré pour s'écouler à travers le circuit d'écoulement ;
(c) chauffage du matériau de transfert de chaleur au moyen du dispositif de chauffage par rayonnement ;
(d) déplacement du matériau de transfert de chaleur chauffé à travers la canalisation au moyen de la pompe et à l'intérieur de passages internes d'une turbine à haute pression (12) de la turbine à vapeur, le matériau de transfert de chaleur chauffé transférant directement de la chaleur à la vapeur d'eau dilatée dans la turbine à haute pression pour augmenter une température moyenne d'apport de chaleur ;
(e) transfert de la vapeur d'eau chauffée à une turbine à pression intermédiaire (13) de la turbine à vapeur ; et
(f) transfert de la vapeur d'eau chauffée à une turbine à basse pression (14) de la turbine à vapeur ;
**caractérisé en ce que**
le matériau de transfert de chaleur s'écoule à travers des passages d'écoulement internes (16) de lames de stator (20) de la turbine à vapeur (11) pour transférer directement de la chaleur à la vapeur d'eau.

7. Procédé de la revendication 6, comportant en outre l'étape de répétition des étapes (c) et (d) pour fournir un apport continu de chaleur à la vapeur d'eau dilatée dans la turbine à haute pression.

8. Procédé selon la revendication 6, dans lequel l'étape de chauffage comporte l'étape de chauffage du matériau de transfert de chaleur jusqu'à une température de 1400 degrés Fahrenheit (760 degrés Celsius) .
